# EUROPEAN PATENT SPECIFICATION

(11) **EP 1 851 467 B1**
(45) Date of publication and mention of the grant of the patent: **18.06.2008**
(21) Application number: 06706295.0
(22) Date of filing: 19.01.2006
(51) Int. Cl.: F16J 15/06

(54) **SLEEVE FOR PRE-ASSEMBLY OF A FLAT GASKET ON A MACHINE COMPONENT**
HÜLSE ZUR VORMONTAGE EINER FLACHDICHTUNG AN EINEM MASCHINENTEIL
MANCHON DESTINE AU PRE-ASSEMBLAGE D'UN JOINT PLAT SUR UN COMPOSANT D'UNE MACHINE

(30) Priority: 25.02.2005 DE 102005008675
(43) Date of publication of application: 07.11.2007
(73) Proprietor: ElringKlinger AG, 72581 Dettingen (DE); A. RAYMOND ET CIE, 38000 Grenoble (FR)
(72) Inventor: KULLEN, Wilhelm, 72584 Hülben (DE); SCHÖLLHAMMER, Jochen, 72581 Dettingen/Erms (DE); BERNAUER, Herbert, 79539 Lörrach (DE); BÜSCH, Martin, 79588 Efringen-Kirchen (DE); HAUSER, Ingo, 79400 Kandern (DE); HULLMANN, Klaus, 79540 Lörrach (DE); PHILIPP, Norman, 79540 Lörrach (DE)
(74) Representative: Haecker, Walter
(86) International application number: PCT/EP2006/000438
(87) International publication number: WO 2006/089604

(56) References cited:
- EP-A- 1 134 463
- US-A- 4 014 245
- US-A- 5 645 282

## Description

The customers of flat gasket manufacturers are demanding more and more often that in order to simplify assembly of an internal combustion engine or other machines, a flat gasket that is to be installed be configured such that it can be pre-assembled on a sealing surface of a machine component, i. e., that after the flat gasket has been placed on this machine component sealing surface, it will not fall off the machine component. This is required, in particular, of so-called secondary gaskets for internal combustion engines, for example, of intake manifold or exhaust manifold gaskets, but also of other flange gaskets clamped between the sealing surfaces facing each other on flanges that are to be screwed to one another (see US - A - 5 645 827).

From DE-100 13 130-A1 of Elring Klinger GmbH (see, in particular, Figures 5 to 9 therein) there is known a sleeve serving for such pre-assembly of a flat gasket, which is a plastic injection-molded part. This sleeve serves to hold a flat gasket on a sealing surface of a machine component, more particularly, in an area of the latter in which the wall thickness of the machine component is somewhat less than the length of the sleeve, which has projections on its outer circumference, more particularly, at the sleeve ends. The machine component has a through-bore opening into its sealing surface, and the gasket plate of the flat gasket has a hole corresponding to this bore. The sleeve is designed so that it is insertable into the through-bore and the hole of the gasket plate, and the projections then engage behind both the machine component and the flat gasket and thereby hold the flat gasket on and the sleeve in the machine component. On the side of the machine component facing away from the machine component sealing surface, its through-bore is provided with a countersink which, when the sleeve is assembled, receives its projections provided at one sleeve end. The projections provided at the other sleeve end for engaging behind the side of the flat gasket that faces away from the machine component sealing surface have an approximately triangular cross section (in a longitudinal section through the sleeve) and thus two sloped surfaces inclined in relation to a diameter plane of the sleeve, one of which is to facilitate the pushing of the sleeve into the through-bore of the machine component and the pushing of the sleeve through the hole of the flat gasket when the sleeve is pushed in from the side of the machine component facing away from the machine component sealing surface. In order that the sleeve diameter can be reduced for assembly of the sleeve, the sleeve wall is provided with slots extending in axial direction, which extend over part of the length of the sleeve, more particularly, starting from that sleeve end which extends through the flat gasket when the sleeve is assembled. In the case of this known construction, the flat gasket manufacturer supplies the sleeves as single parts separate from the flat gaskets to the customer, where the flat gaskets are first placed on the machine component sealing surfaces and the sleeves then attached, and the flat gaskets are thereby held on the machine components.

The present invention is to achieve the object of even further simplifying the pre-assembly of a flat gasket on a machine component for the customer of the flat gasket manufacturer.

Starting from the above-described prior art, i. e., from a sleeve for pre-assembly of a flat gasket comprising a gasket plate on a sealing surface of a machine component provided with a hole opening into this sealing surface for insertion of the sleeve therein, the gasket plate having a hole for passage of the sleeve therethrough, and the one, first end area of the sleeve being elastically compressible for reduction of its outer diameter and being provided with a stop acting in the direction of the sleeve axis for placement against the gasket plate, this object is accomplished, in accordance with the invention, in that the sleeve has stops on the outer circumference of its first end area, which act in both directions of the sleeve axis to hold the sleeve on the gasket plate in an axial position pre-determined by the stops, and the sleeve is also of such configuration at its outer circumference that insertion of the sleeve in the hole of the machine component results in a frictionally engaged and/or positively locked connection between the machine component and the sleeve. When hereinabove reference is made to a predetermined axial position of the sleeve relative to the gasket plate, this must not be interpreted in such a narrow sense that a quite precisely axial position is to be understood by this, as a certain axial play of the sleeve on the gasket plate may indeed be tolerated - it is only displacement of the sleeve to any major extent on the flat gasket that is to be prevented, as this would cause problems with the handling of the flat gaskets provided with the sleeves and with automatic attachment of the flat gaskets to the machine components. Many different configurations for the sleeve are available to those skilled in the art for achieving a frictionally engaged and/or positively locked connection between the machine component and the sleeve: as the outer diameter of the undeformed sleeve may readily be somewhat larger than the diameter of the hole provided in the machine component, a so-called press fit of the sleeve in this hole is already adequate. Knobs, ribs or the like may be provided on the outer circumference of the sleeve, and these press against the hole wall when the sleeve is assembled. In the case of a metal sleeve, spike-shaped tongues could be bent out of the sleeve wall so as to interact with the hole wall in the fashion of barbs when the sleeve is assembled. In connection with this, it must be borne in mind that, in principle, it is only a question of compensating at most the inherent weight of the flat gasket in order that it will not be able to become detached from the machine component due to gravity.

If the flat gasket is one whose gasket plate is formed by a single sheet metal layer at least in the area of the hole for insertion of the sleeve therethrough, it is recommended that the axial spacing of the stops be selected such that it is equal to or only slightly larger than the thickness of this sheet metal layer. If, however, the gasket plate is formed by a plurality of sheet metal layers arranged one over the other, as is often the case with metal flat gaskets, a further advantage is achievable with the sleeve according to the invention when the axial spacing of the stops is equal to or only slightly larger than the thickness of the set of layers formed by the sheet metal layers, for the sheet metal layers are then also held together by the sleeve. In the case of such multi-layered flat gaskets, the sheet metal layers are often held together at only a few locations, for example, by spot welding or riveting, and in the case of elongate flat gaskets such as, for example, manifold gaskets on multicylinder engines, these junctions are usually located in the areas of the two longitudinal ends of the gasket plate, so that during the handling of the gasket the sheet metal layers between these junctions that are relatively remote from one another may move away from one another, which may be prevented by a sleeve according to the invention when this is arranged, for example, halfway between the junctions.

For further simplification or automatization of the assembly, preferred embodiments of the sleeve according to the invention are characterized in that for holding and aligning a threaded shaft inserted into the sleeve, at least in a section of the sleeve the clear inner diameter of the sleeve is slightly smaller than the outer diameter of the threaded shaft. For, screws serving to clamp the flat gaskets between machine component sealing surfaces can then also be pre-assembled, so that during the final assembly of the engine or a group of components containing a flat gasket, the supplying and positioning of individual screws is dispensed with. The threaded shaft can be held by simple frictional engagement in the sleeve when the sleeve is configured such that after the threaded shaft is pushed or screwed into the sleeve, the sleeve is pressed elastically against the threaded shaft. Depending on the axial length of that sleeve area which holds the threaded shaft, the sleeve is also suited for correct axial alignment of the threaded shaft or the screw with respect to the flat gasket and therefore with respect to the machine component on which the flat gasket is pre-assembled. However, an even better support is obtained for the threaded shaft when the sleeve is configured such that when the threaded shaft is being screwed into the sleeve, the thread of the threaded shaft is pressed into the sleeve or projections provided on the sleeve for engagement in the thread are arranged in accordance with the thread pitch. In the same way as the known sleeve described at the outset, the sleeve according to the invention may also be a slotted plastic injection-molded part. An alternative embodiment is, however, a punched and bent part made of spring-elastic sheet steel which, if it does not have a circular cross section, can be inserted after elastic deformation into the flat gasket and the machine component. However, this procedure can be carried out more easily when the sleeve wall has a longitudinal slot, in particular, a continuous longitudinal slot, extending approximately in the direction of the sleeve axis, and such a continuous longitudinal slot could also be used in a plastic sleeve according to the invention.

As will be apparent from the foregoing, the sleeve according to the invention - differently than the previously known sleeve disclosed in DE-100 13 130-A1 - is suited not only for machine components of comparatively small wall thickness such as flanges, but also for pre-assembly of a flat gasket on a machine component of large wall thickness, as the sleeve according to the invention does not engage behind the machine component but is held thereon by a frictionally engaged and/or positively locked connection between the sleeve and the wall of the hole provided in the machine component.

If the sleeve according to the invention is a plastic injection-molded part, preferred embodiments are characterized in that the sleeves are parts of a continuous chain formed by sleeves and plastic webs connecting these to one another - these webs then break off from the sleeves in a known manner when the sleeves are attached to the flat gasket.

The invention further relates to a flat gasket with a sleeve according to the invention attached thereto, and, finally, the invention also relates to a method for pre-assembly of a flat gasket on a sealing surface of a machine component, wherein a sleeve according to the invention is first inserted into a hole of the flat gasket and thereby fixed to the flat gasket, following which the flat gasket is placed on the sealing surface of the machine component and the sleeve is simultaneously inserted into a hole in the machine component.

Further features, advantages and details of the invention will be apparent from the following description and the appended drawings of several embodiments of the sleeve according to the invention. In the drawings:
- Figure 1: is a schematic section through a first embodiment in the form of a plastic sleeve and through the adjacent parts of a flat gasket and a machine component on which the flat gasket was pre-assembled;
- Figure 2: is a sectional representation corresponding to Figure 1 through a second embodiment together with a screw shaft held by the sleeve;
- Figure 3A: is a broken open side view of a third embodiment produced as a plastic sleeve;
- Figure 3B: is a section through the third embodiment according to line B-B in Figure 3A;
- Figure 3C: is a section through the third embodiment according to line C-C in Figure 3A;
- Figure 3D: is an isometric representation of the third embodiment;
- Figure 3E: is a section through two machine components and a flat gasket arranged between these, but without a sleeve according to the invention;
- Figure 3F: is the sectional representation of Figure 3E, but together with the third embodiment of the sleeve according to the invention;
- Figure 4A: is an end view of a fourth embodiment of the sleeve according to the invention produced as a punched and bent part made of sheet steel;
- Figure 4B: is a section along line B-B in Figure 4A;
- Figure 4C: is a section along line C-C in Figure 4A; and
- Figure 4D: is an isometric representation of the fourth embodiment of the sleeve according to the invention.

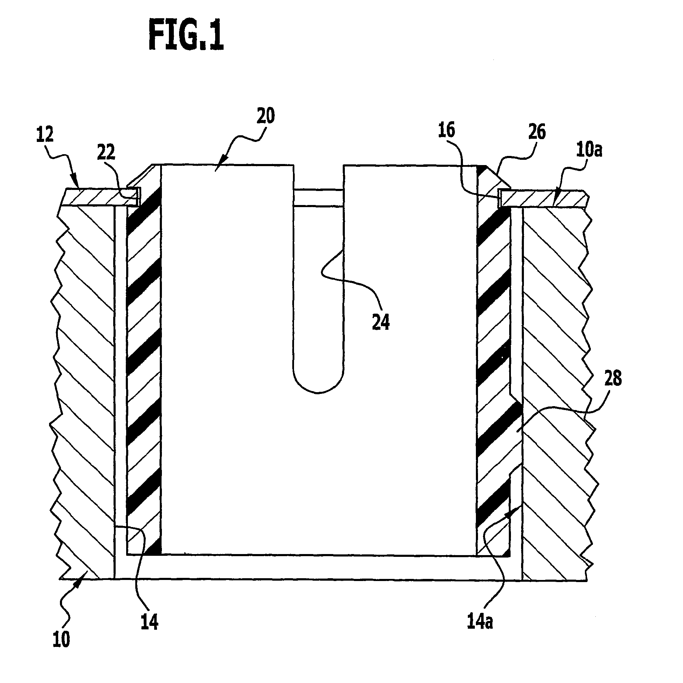

Figure 1 shows a flange-like machine component 10 with a sealing surface 10a, on which a flat gasket 12, shown only schematically, rests. The machine component 10 has a hole 14 in the form of a through-bore, and the flat gasket 12 has a hole 16, which like the hole 14 is to be circular, in the illustrated embodiment has a somewhat smaller diameter than the hole 14 and after pre-assembly of the flat gasket 12 is concentric with the hole 14. A second machine component, between whose sealing surface and the sealing surface 10a the flat gasket 12 is to be clamped, was not drawn.

An inventive sleeve 20 in the form of a plastic injection-molded part is provided in the area of its one upper end on its outer circumference with an annular groove 22. At the groove bottom or base the outer diameter of the sleeve 20 is only very slightly smaller than the diameter of the hole 16 of the flat gasket 12. Therefore, the upper and lower side walls of the annular groove 22 form axial stops for the flat gasket 12, the spacing of the side walls of the groove from one another, measured in the direction of the sleeve axis, being only slightly larger than the thickness of the flat gasket. The sleeve 20 is provided with several longitudinal slots 24, for example, with two opposed longitudinal slots or three longitudinal slots spaced at a circumferential angle of 120° respectively from one another, and these extend from the upper sleeve end over part of the length of the sleeve, in particular, over approximately half of the length of the sleeve. Owing to these longitudinal slots 24, the plastic sleeve 20 is elastically compressible to some extent, in order to snap it into the flat gasket 12, as shown in Figure 1. To facilitate this procedure, the sleeve 20 has a sloped insert portion 26 at its upper end. Finally, a plurality of knob-like projections 28, only one of which is recognizable in Figure 1, are formed on the outer circumference of the sleeve 20. These are distributed over the circumference and part of the length of the sleeve and are of such dimensions as to produce a press fit upon pressing the sleeve 20 into the hole 14, i. e., the static friction between the projections 28 and the wall 14a of the hole 14 prevents the sleeve 20 from being pulled out of the hole 14 under the influence of the weight of the flat gasket 12 (and of the sleeve 20), when the assembly shown in Figure 1 is turned upside down.

Accordingly, in accordance with the invention, the sleeve 20 according to Figure 1 can be snapped into the hole 16 of the flat gasket 12 from below and thus fixed on the flat gasket, and by placement of the flat gasket 12 on the machine component 10 and the accompanying insertion of the sleeve 20 into the machine component hole 14, the flat gasket 12 is pre-assembled and held on the machine component.

When the flat gasket 12 is clamped between the machine component sealing surface l0a and the sealing surface of the second machine component that is not illustrated, the part of the sleeve 20 projecting over the annular groove 22 is either squashed without detriment to the sealing capability of the assembly, or a depression or some other recess must be present in the sealing surface of the other machine component to accommodate this sleeve portion. A further alternative consists in the flat gasket 12 being provided with a coating, in particular, an elastomeric coating, on its upper, in accordance with Figure 1, side, as is the case with many flat gaskets which do not extend as far as the rim area of the hole 16. If the sleeve 20 then only projects very slightly over the annular groove 22, in particular, in the order of magnitude of the thickness of the said coating, the projection of the sleeve does not have any negative effect either.

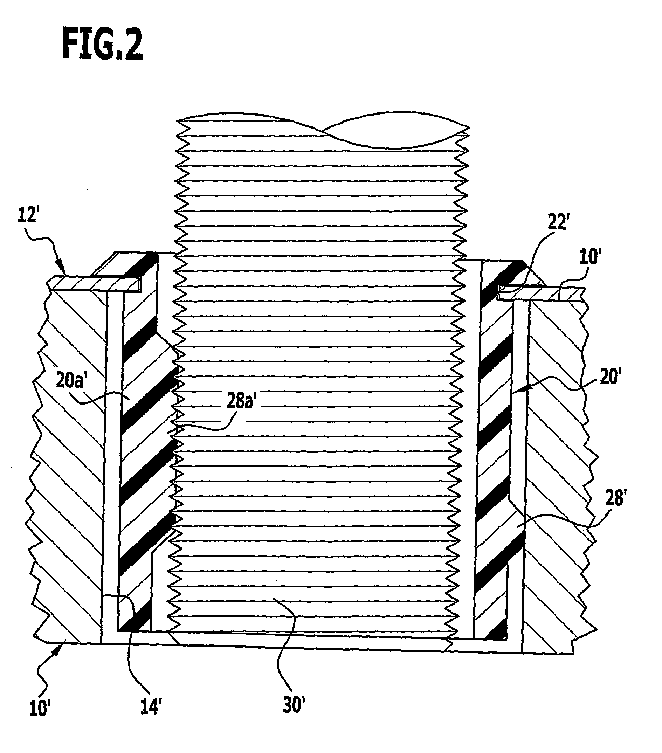

The second embodiment shown in Figure 2 corresponds substantially to that of Figure 1. Therefore, the same reference numerals are used in Figure 2 as in Figure 1, but with the addition of a prime, and Figure 2 will only be explained hereinbelow insofar as it differs from Figure 1.

Figure 2 shows a threaded shaft 30' of a screw held in an axially aligned manner in the sleeve 20' so that it cannot get lost, namely owing to local constrictions in the inner cross section of the sleeve. For this purpose, there are formed on the inside of the sleeve wall 20a' a plurality of rib-like projections 28a' extending in the direction of the sleeve axis and spaced at a circumferential angle of 120°, for example, in the case of three projections, at 90°, for example, in the case of four projections. In the area of the projections 28a', the clear inner diameter of the sleeve 20' is either very slightly smaller than the outer diameter of the threaded shaft 30', or the sleeve 20' consists of such a material and the projections 28a' are of such dimensions that with a smaller clear inner diameter of the sleeve, the threaded shaft 30' can be screwed into the sleeve, with the thread being pressed into the projections 28a'. The web-like or rib-like projections 28a' could, however, also be replaced by small knob-shaped or pointed projections, which are arranged in accordance with the thread pitch of the threaded shaft 30' and mesh with the thread (preferably with slight frictional engagement) upon screwing the threaded shaft into the sleeve.

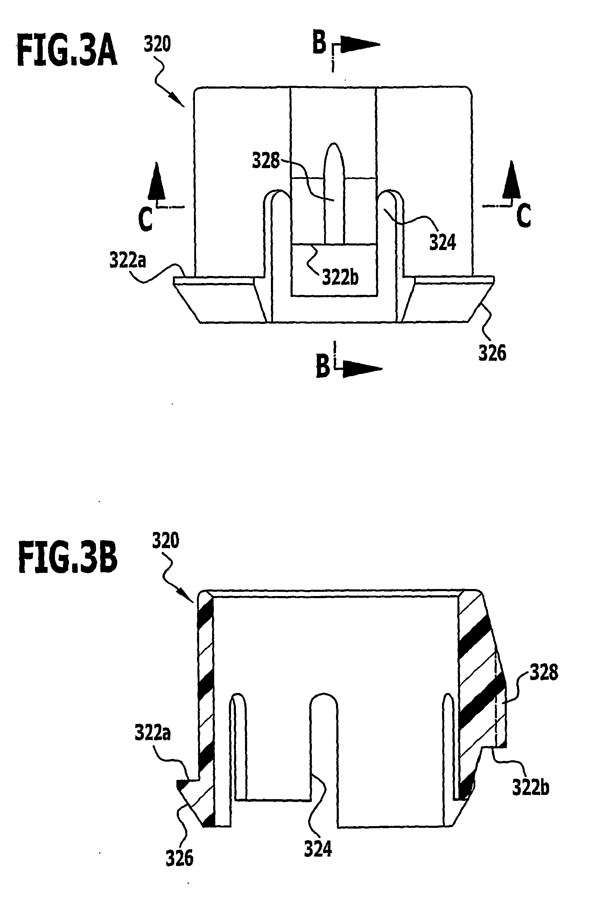

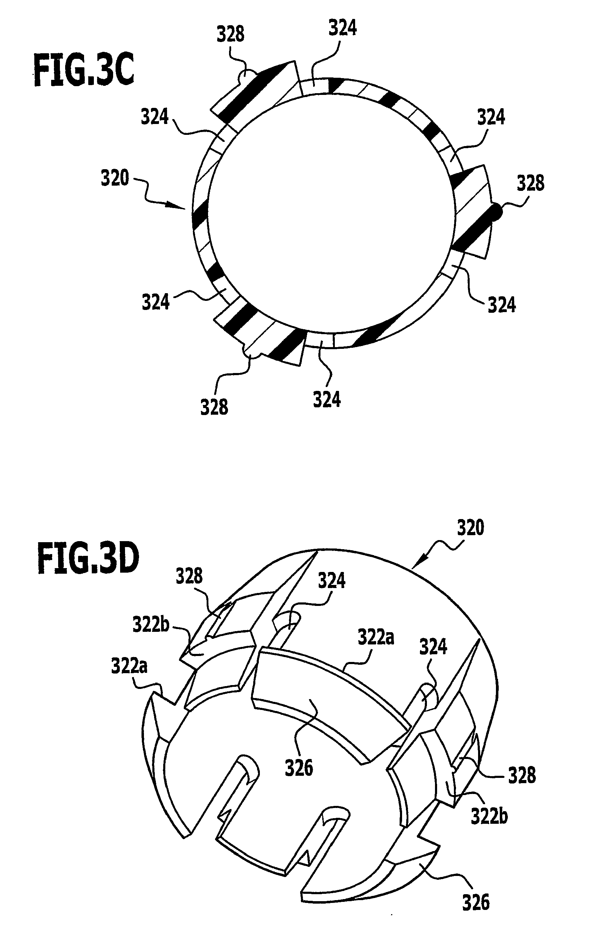

Figures 3A to 3D show a third embodiment of an inventive sleeve 320 in the form of a plastic injection-molded part. This has at its one end face a sloped insert portion 326 adjoined on the outer circumference of the sleeve by a first axial stop 322a, which like the sloped insert portion 326 is interrupted in the circumferential direction of the sleeve. At an axial spacing from the first stop 322a, which corresponds to the thickness of the gasket plate of the associated flat gasket, there is provided on the outer circumference of the sleeve a second axial stop 322b, which is likewise interrupted in the circumferential direction of the sleeve. Adjoining the three sectors of the second stop 322b, in this embodiment, in the axial direction are projections 328, which, when the sleeve is inserted in a machine component hole, result in a press fit of the sleeve in this hole. For this purpose, the sleeve 320 is likewise slotted over part of its length, i. e., provided with longitudinal slots 324, and can only be pushed into the machine component hole by compression, i. e., reduction of its outer diameter.

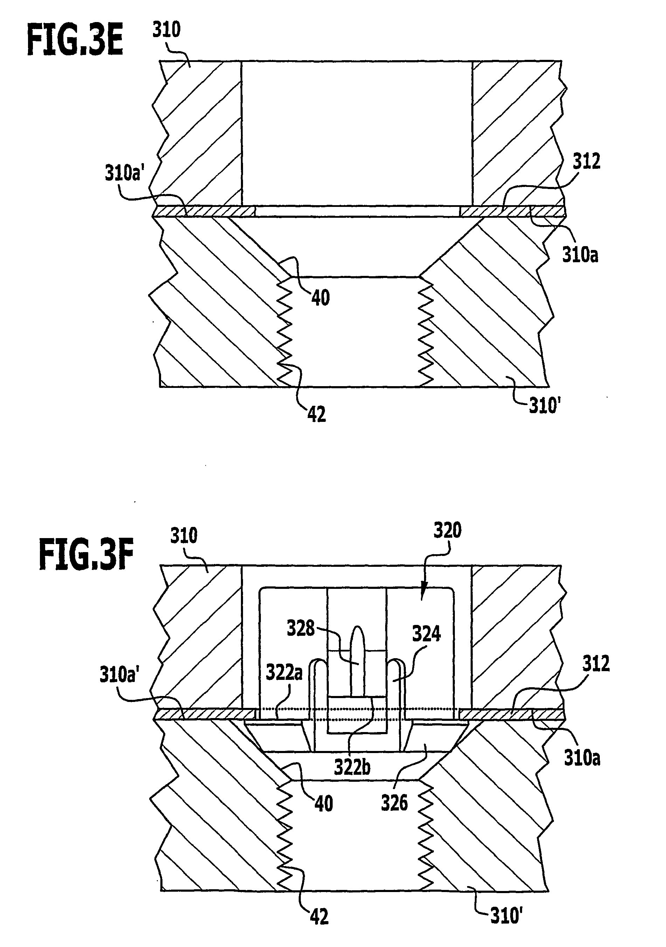

Figures 3E and 3F show a first machine component 310 and a second machine component 310' with sealing surfaces 310a and 310a', between which a flat gasket 312 is clamped. Figures 3E and 3F differ only in that Figure 3F also shows the sleeve 320. Starting from the sealing surface 310a', the machine component 310' has a countersink 40, which serves to receive the part of the sleeve 320 projecting over the first axial stop 322a; and adjoining this countersink is a bore 42 for passage of a threaded shaft such as depicted in Figure 2.

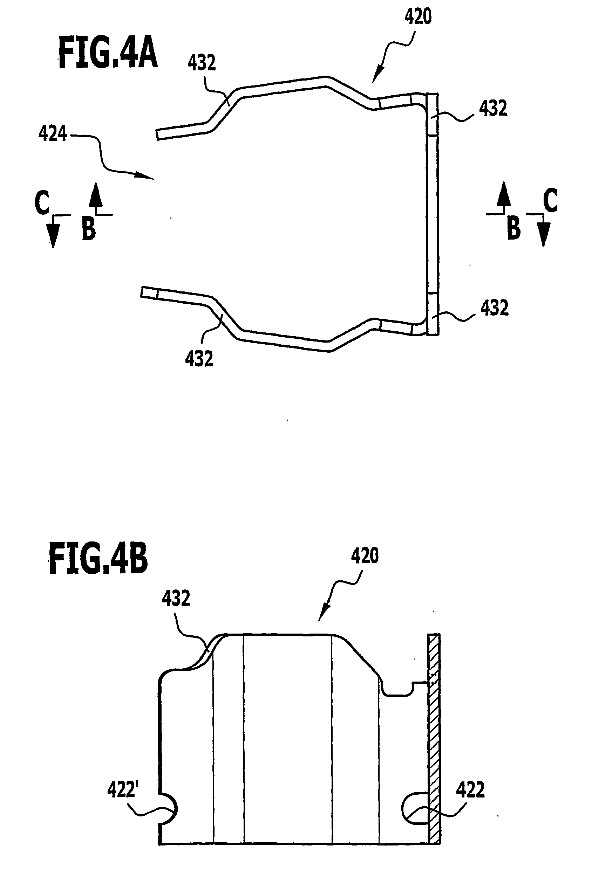

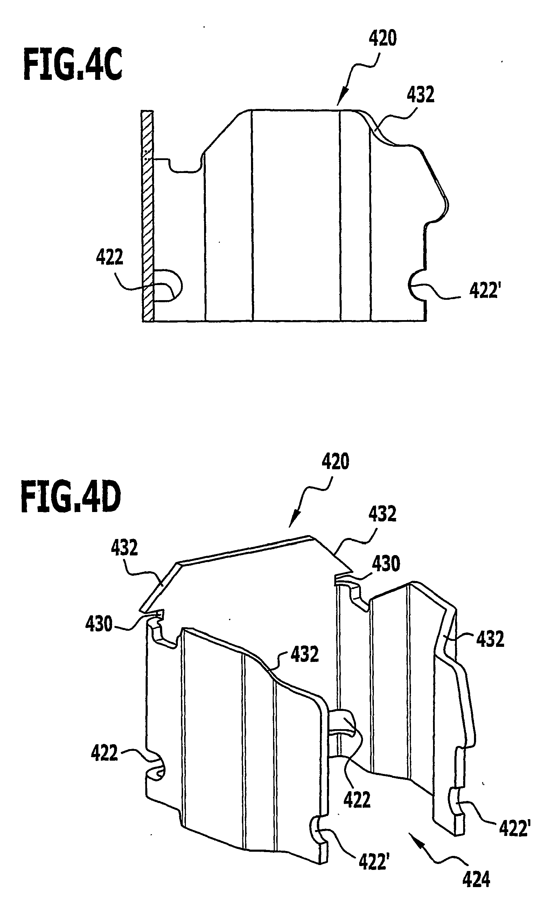

The fourth embodiment of a sleeve 420 according to the invention, shown in Figures 4A to 4D, is a punched and bent part made of sheet spring steel, which has a continuous longitudinal slot 424 and a cross section apparent from Figure 4A, which corresponds approximately to the shape of a U. In accordance with the invention, in the areas of the two rounded corners of the sleeve cross section and of the free ends of the two legs of the sleeve cross section, the sleeve 420 has cut-outs 422 and 422', respectively, which are arranged at only a very slight spacing from a sleeve end and are of such dimensions that the hole rim area of a gasket plate of a flat gasket or a layer of a multi-layered gasket plate of a flat gasket can engage in them, in particular, without any appreciable play in the direction of the sleeve axis. The cross section of the unpressed sleeve 420 is dimensioned, configured and adapted to the cross section of a machine component hole such that, when the sleeve is inserted in this hole, it rests with pretension against the hole wall. The illustrated sleeve 420 is intended for insertion in a relatively thin-walled machine component and, therefore, has projections 430 engaging behind the latter and sloped insert portions 432.

Two or three side walls of the sleeve 420 of U-shaped cross section could be provided with inwardly directed stampings, with which a threaded shaft of a screw can again be held.

## Claims

1. Sleeve (20) for pre-assembly of a flat gasket (12) comprising a gasket plate on a sealing surface (10a) of a machine component (10) having a hole (14) opening into this sealing surface (10a) for insertion of the sleeve (20) therein, the gasket plate (12) having a hole (16) for passage of the sleeve (20) therethrough, and the one, first end area of the sleeve (20) being elastically compressible for reduction of its outer diameter and having a stop acting in the direction of the sleeve axis for placement against the gasket plate (12), **characterized in that** the sleeve (20) has stops (22) on the outer circumference of its first end area, which in use act in both directions of the sleeve axis to hold the sleeve (20) on the gasket plate (12) in an axial position predetermined by the stops (22), and the sleeve is also of such configuration at its outer circumference that insertion of the sleeve in the hole of the machine component results in a frictionally engaged and/or positively locked connection between the machine component and the sleeve.

2. Sleeve in accordance with claim 1, **characterized in that** in the case of a flat gasket whose gasket plate (12) is formed by a single sheet metal layer in the area of the hole for passage of the sleeve (20) therethrough, the axial spacing of the stops (22) is the same as or only slightly larger than the thickness of the sheet metal layer.

3. Sleeve (20) in accordance with claim 1, **characterized in that** in the case of a flat gasket (12) whose gasket plate comprises several sheet metal layers arranged one over the other, in order to hold together the set of layers formed by the sheet metal layers, the axial spacing of the stops (22) is the same as or only slightly larger than the thickness of the set of layers.

4. Sleeve (20) in accordance with any one of the preceding claims, **characterized in that** in order to hold and align a threaded shaft inserted in the sleeve (20), at least in a section of the sleeve (20), the clear inner diameter of the sleeve is slightly smaller than the outer diameter of the threaded shaft.

5. Sleeve (20) in accordance with claim 4, **characterized in that** the sleeve (20) is configured such that after screwing the threaded shaft into the sleeve (20), the sleeve is pressed elastically against the threaded shaft.

6. Sleeve in accordance with claim 4, **characterized in that** the sleeve (20) is configured such that the thread of the threaded shaft is pressed into the sleeve (20) when the threaded shaft is being screwed into the sleeve.

7. Sleeve (20) in accordance with any one of the preceding claims, **characterized in that** the sleeve (20) as on its outer circumference at least one projection for such cooperation with the wall of the machine component hole that insertion of the sleeve in the machine component hole results in a frictionally engaged and/or positively locked connection of the sleeve (20) with the machine component.

8. Sleeve (420) in accordance with any one of the preceding claims, **characterized in that** the sleeve (420) is a punched and bent part made of spring-elastic sheet steel.

9. Sleeve (420) in accordance with claim 8, **characterized in that** the sleeve wall has a longitudinal slot, in particular, a continuous longitudinal slot (424), extending approximately in the direction of the sleeve axis.

10. Sleeve (320) in accordance with any one of claims 1 to 7, **characterized in that** the sleeve is a plastic injection-molded part with slots (322) extending in axial direction in the sleeve wall, which, starting from the sleeve end adjacent the stops, extend over part of the length of the sleeve.

11. Flat gasket with a sleeve in accordance with any one of claims 1 to 10 attached thereto.

## Patentansprüche

1. Hülse (20) zur Vormontage einer eine Dichtungsplatte umfassenden Flachdichtung (12) an einer Dichtfläche (10a) einer Maschinenkomponente (10), welche ein in diese Dichtfläche (10a) mündendes Loch (14) zum Einführen der Hülse (20) hierein aufweist, wobei die Dichtungsplatte (12) ein Loch (16) zum Durchgang der Hülse (20) hierdurch aufweist und wobei der eine, erste Endbereich der Hülse (20) elastisch komprimierbar ist zur Verminderung seines Außendurchmessers und einen in der Richtung der Hülsenachse wirkenden Anschlag aufweist zum In-Anlage-Bringen gegen die Dichtungsplatte (12), **dadurch gekennzeichnet, dass** die Hülse (20) Anschläge (22) am Außenumfang ihres ersten Endbereichs aufweist, die im Gebrauch in beiden Richtungen der Hülsenachse wirken, um die Hülse (20) an der Dichtungsplatte (12) in einer von den Anschlägen (22) vorgegebenen axialen Position zu halten, und wobei die Hülse ferner eine derartige Gestaltung an ihrem Außenumfang aufweist, dass Einführung der Hülse in das Loch der Maschinenkomponente in einer reib- und/oder formschlüssigen Verbindung zwischen der Maschinenkomponente und der Hülse resultiert.

2. Hülse nach Anspruch 1, **dadurch gekennzeichnet, dass** im Falle einer Flachdichtung, deren Dichtungsplatte (12) von einer einzigen Metallblechlage im Bereich des Lochs zum Durchgang der Hülse (20) hierdurch gebildet ist, der axiale Abstand der Anschläge (22) gleich oder nur geringfügig größer ist als die Dicke der Metallblechlage.

3. Hülse (20) nach Anspruch 1, **dadurch gekennzeichnet, dass** im Falle einer Flachdichtung (12), deren Dichtungsplatte mehrere übereinander angeordnete Metallblechlagen umfasst, zum Zusammenhalten des von den Metallblechlagen gebildeten Satzes von Lagen der axiale Abstand der Anschläge (22) gleich oder nur geringfügig größer ist als die Dicke des Satzes von Lagen.

4. Hülse (20) nach einem der vorstehenden Ansprüche, **dadurch gekennzeichnet, dass** zum Halten und Ausrichten eines in die Hülse (20) eingeführten Gewindeschaftes zumindest in einem Abschnitt der Hülse (20) der lichte Innendurchmesser der Hülse geringfügig kleiner ist als der Außendurchmesser des Gewindeschaftes.

5. Hülse (20) nach Anspruch 4, **dadurch gekennzeichnet, dass** die Hülse (20) so gestaltet ist, dass nach Eindrehen des Gewindeschaftes in die Hülse (20) die Hülse elastisch gegen den Gewindeschaft gedrückt wird.

6. Hülse nach Anspruch 4, **dadurch gekennzeichnet, dass** die Hülse (20) so gestaltet ist, dass das Gewinde des Gewindeschaftes in die Hülse (20) gedrückt wird, wenn der Gewindeschaft in die Hülse eingedreht wird.

7. Hülse (20) nach einem der vorstehenden Ansprüche, **dadurch gekennzeichnet, dass** die Hülse (20) an ihrem Außenumfang mindestens einen Vorsprung für ein derartiges Zusammenwirken mit der Wand des Lochs der Maschinenkomponente aufweist, dass Einführung der Hülse in das Loch der Maschinenkomponente in einer reib- und/oder formschlüssigen Verbindung der Hülse (20) mit der Maschinenkomponente resultiert.

8. Hülse (420) nach einem der vorstehenden Ansprüche, **dadurch gekennzeichnet, dass** die Hülse (420) ein aus federelastischem Stahlblech gestanztes und gebogenes Teil ist.

9. Hülse (420) nach Anspruch 8, **dadurch gekennzeichnet, dass** die Hülsenwand einen Längsschlitz aufweist, insbesondere einen kontinuierlichen Längsschlitz (424), der sich in etwa in der Richtung der Hülsenachse erstreckt.

10. Hülse (320) nach einem der Ansprüche 1 bis 7, **dadurch gekennzeichnet, dass** die Hülse ein spritzgegossenes Kunststoffteil ist mit sich in Axialrichtung in der Hülsenwand erstreckenden Schlitzen (322), die sich ausgehend von dem den Anschlägen benachbarten Hülsenende über einen Teil der Länge der Hülse erstrecken.

11. Flachdichtung mit einer an ihr festgelegten Hülse gemäß einem der Ansprüche 1 bis 10.

## Revendications

1. Manchon (20) destiné au pré-assemblage d'un joint plat (12) comprenant une plaque de joint sur une surface d'étanchéité (100) d'un composant de machine (10) présentant un trou (14) s'ouvrant à l'intérieur de cette surface d'étanchéité (100) pour y insérer le manchon (20), la plaque de joint (12) présentant un trou (16) pour le passage du manchon (20) à travers celui-ci, et la première zone d'extrémité du manchon (20) étant élastiquement compressible pour la réduction de son diamètre externe et présentant une butée agissant dans la direction de l'axe de manchon pour un placement contre la plaque de joint (12), **caractérisé en ce que** le manchon (20) présente des butées (22) sur la circonférence externe de sa première zone d'extrémité, qui au cours d'une utilisation agissent dans les deux directions de l'axe de manchon pour maintenir le manchon (20) sur la plaque de joint (12) dans une position axiale prédéterminée par les butées (22), et le manchon est également d'une configuration telle au niveau de sa circonférence externe que l'insertion du manchon dans le trou du composant de machine entraîne une connexion mise en prise par friction et/ou verrouillée positivement entre le composant de machine et le manchon.

2. Manchon conformément à la revendication 1, **caractérisé en ce que** dans le cas d'un joint plat dont la plaque de joint (12) est formée par une seule couche de tôle dans la zone du trou pour le passage du manchon (20) à travers celui-ci, l'espacement axial des butées (22) est le même que ou légèrement supérieur à l'épaisseur de la couche de tôle.

3. Manchon (20) conformément à la revendication 1, **caractérisé en ce que** dans le cas d'un joint statique plat (12) dont la plaque de joint comprend plusieurs couches de tôle agencées les unes au-dessus des autres, afin de maintenir ensemble le groupe de couches formées par les couches de tôle, l'espacement axial des butées (22) est le même que ou légèrement supérieur à l'épaisseur du groupe des couches.

4. Manchon (20) conformément à l'une quelconque des revendications précédentes, **caractérisé en ce qu'**afin de maintenir et d'aligner une tige filetée insérée dans le manchon (20), au moins dans une section du manchon (20), le diamètre interne du manchon est légèrement inférieur au diamètre externe de la tige filetée.

5. Manchon (20) conformément à la revendication 4, **caractérisé en ce que** le manchon (20) est configuré de telle sorte qu'après avoir vissé la tige filetée à l'intérieur du manchon (20), le manchon est pressé élastiquement contre la tige filetée.

6. Manchon conformément à la revendication 4, **caractérisé en ce que** le manchon (20) est configuré de telle sorte que le filet de la tige filetée est pressé à l'intérieur du manchon (20) lorsque la tige filetée est vissée à l'intérieur du manchon.

7. Manchon (20) conformément à l'une quelconque des revendications précédentes, **caractérisé en ce que** le manchon (20) présente sur sa circonférence externe au moins une saillie destinée à coopérer avec la paroi du trou du composant de machine de telle sorte que l'insertion du manchon dans le trou du composant de machine entraîne une connexion mise en prise par friction et/ou verrouillée positivement du manchon (20) avec le composant de machine.

8. Manchon (420) conformément à l'une quelconque des revendications précédentes, **caractérisé en ce que** le manchon (420) est une pièce poinçonnée et fléchie fabriquée en tôle d'acier élastique à ressort.

9. Manchon (420) conformément à la revendication 8, **caractérisé en ce que** la paroi du manchon présente une fente longitudinale, en particulier, une fente longitudinale continue (424), s'étendant approximativement dans la direction de l'axe du manchon.

10. Manchon (320) conformément à l'une quelconque des revendications 1 à 7, **caractérisé en ce que** le manchon est une pièce en plastique moulée par injection dotée de fentes (322) s'étendant dans la direction axiale dans la paroi du manchon, qui, en partant de l'extrémité du manchon adjacente aux butées, s'étendent au-dessus d'une partie de la longueur du manchon.

11. Joint plat conformément à l'une quelconque des revendications 1 à 10 annexées.
